# EUROPEAN PATENT SPECIFICATION

(11) **EP 0 695 407 B1**
(45) Date of publication and mention of the grant of the patent: **26.11.1997**
(21) Application number: 94912658.5
(22) Date of filing: 21.04.1994
(51) Int. Cl.: F16L 47/02, B29C 65/34, F16L 55/165

(54) **ARTICLE AND METHOD FOR MODIFYING THE SURFACE OF A SUBSTRATE**
ARTIKEL UND VERFAHREN ZUR MODIFIZIERUNG DER OBERFLÄCHE EINES SUBSTRATES
PRODUIT ET PROCEDE DESTINE A MODIFIER LA SURFACE D'UN SUBSTRAT

(30) Priority: 21.04.1993 GB 9308277
(43) Date of publication of application: 07.02.1996
(73) Proprietor: N.V. RAYCHEM S.A., 3010 Kessel-Lo (BE)
(72) Inventor: DEFOOR, Francis, B-3001 Leuven (BE); CORDIA, Johannes, Maria, B-3212 Pellenberg (BE)
(74) Representative: Auckland, Jacqueline
(86) International application number: GB9400840
(87) International publication number: WO9424478

(56) References cited:
- EP-A- 0 236 056
- EP-A- 0 498 602

## Description

This invention relates to articles that, at least in part, comprise conductive polymeric materials and are electrically heatable and methods for lining, repairing, joining, reinforcing or otherwise modifying elongate substrates such as pipes or cables using such articles, particularly the internal surface of hollow elongate substrates, especially pipelines. The invention finds particular application for lining, joining, re-joining, or repairing the joint between a lateral and a main pipeline.

It is known to line pipelines or line joints of lateral connections to main pipelines using polymeric lining sleeves inflated within the pipeline. EP-A-0377486 A, for example, describes a method of lining a straight pipe using a circular cross-sectioned liner tube that has been deformed to a non circular shape to insert it into a pipe, and then reverted to its circular shape by filling with a hot liquid. US-A-4434115 describes lining of a lateral connection to a pipe by inverting a lining tube, by means of fluid pressure. The lining is preferably flexible but hardenable to form a rigid tube inside the connection.

It is also known to use electrically heatable articles comprising conductive polymeric materials to modify the surface of a substrate. EP-0343757 B1, for example, describes a method of joining together the outer surfaces of articles made from heat softenable compositions, e.g. polymeric pipes, using a non-heat-recoverable conductive polymeric element (preferably carbon-black-containing UHMWPE) positioned in contact with the article or next to an insert, which element is heated to join it to the article either directly or via the insert.

Similarly, WO-88-06517 describes a sintered UHMWPE element which undergoes a dimensional change when heat is generated within it, and which can be used to join first and second articles that it is positioned between.

EP-A-236056 discloses an article provided with heating strips around all its edges and with the same sealing material on all the edges. It is intended to be folded around the outside of elongate objects such that the sealing layers on opposed edges are brought into contact.

We have discovered a new article and method that are particularly useful for modifying the internal surface of a pipeline, and are particularly applicable for joining a lateral pipeline to a main pipeline.

A first aspect of the invention provides a method of modifying the internal surface of a hollow elongate substrate using a wraparound article comprising a polymeric, preferably flexible, backing sheet (ii) an electrically heatable element comprising a conductive polymeric material, bonded to the backing sheet and
covering at least part of the backing sheet, and (iii) optionally a sealing means covering part or all of the electrically heatable element, the method comprising:
(a) wrapping the article to form a tube with overlapping longitudinal edges with the heatable element positioned outwardly of the backing sheet, and inserting the wrapped article within the substrate,
(b) connecting the heatable element to an electrical power source to cause electrical current to flow through the element, to heat and to bond at least part of the outer surface the element to the inner surface of the hollow elongate substrate, either directly, or by means of, or enhanced by, the optional sealing means.

Preferably the electrically heatable element covers part only of the surface of the flexible polymeric backing sheet.

In one construction the wraparound article and backing sheet are substantially rectilinear, and the backing is wrapped so longitudinal edges overlap and can bond together to form a tube. In this case, the electrically heatable element preferably comprises a strip extending along one of the longitudinal edges, which strip can be activated to form the overlap bond. In this case. also, preferably the heatable element comprises a strip extending annularly at one or preferably both ends of the wrapped sheet, on the outer surface as wrapped. These additional heating elements serve to bond each end of the sheet to the inner surface of the substrate.

The advantage achieved when only part of the backing sheet is covered by a heatable element is that the remainder of the sheet is not heated, and hence any potential problem of thermal shrinkage of the sheet, away from the inner surface of the substrate, after heating for installation is completed, is reduced compared to the situation when the whole backing sheet is covered by a heatable element.

The electrically heatable element may itself be of such a nature that it can bond itself to the substrate. If not, or in any case. a sealing material, e.g. an adhesive such as a heat activatable, especially a hot melt adhesive, or a mastic may be included to form or to enhance the bond. This sealing material may cover, part or all the outer (when wrapped) surface of the electrically heatable element. The nature of the sealing material will depend on the nature of the substrate which is being bonded to. For example, for sealing to the inside surface of a concrete main pipe it is useful to include a strip of mastic material as a sealing material. The same or different types of sealing material may be used to cover different parts of the heatable element.

The electrically heatable element comprises a conductive polymeric material. Conductive polymers are well known. They comprise a polymeric component and. dispersed or otherwise distributed therein. a particulate conductive filler, e.g. carbon black. Conductive polymers have been widely used in electrical heaters, including heaters which are in the form of heat-recoverable articles or which are secured to heat-recoverable articles so that, by powering the heater, the article can be caused to recover.

The conductive polymer composition used in the invention preferably comprises polyethylene, particularly ultra-hig molecular weight polyethylene (UHMWPE) together with a particulate conductive filler, especially carbon black. In general the composition preferably consists essentially of
(a) a matrix consisting essentially of organic polymer particles which have been sintered together so that the particles have coalesced without completely losing their identity, and
(b) a particulate filler, preferably carbon black, which is dispersed in said matrix but which is present substantially only at or near the boundaries of the coalesced particles.
Further details of the preferred material can be found in WO-A-88/06517 the disclosure of which is incorporated herein by reference.

The present invention has many applications, and can be used, for example, to seal to the inner surface of polymeric (e.g. polyethylene, or polypropylene), metal (e.g. stainless steel), concrete or clay substrates. The result is a smooth profiled inner seal that does not significantly interfere with the inner volume of the substrate, e.g. flow through a pipeline.

The applications of the present invention including sealing and repairing inner surfaces of substrates, and also joining such substrates. Where a joint is required e.g. between pipes. the article must be sufficiently strong to act as a coupler. It is preferably at least as strong, and as tough as the substrates being jointed. Where the substrates being joined are pipelines that are to be buried in soil, they will be subject, in use, to soil stresses (or in other applications where substrates are exposed to similar in-use stresses) the article should preferably also be flexible enough to accommodate such stresses. This is a matter for the man skilled in the art to balance the nature and thicknesses of the materials used. In general the article should be at least 3 mm thick.

In order to install the article it must be inserted into the substrate, brought into contact with the inner surface of the substrate, and then electrically powered to heat it to bond it to the substrate inner wall. The installation bringing into contact with the substrate wall can be carried out in any convenient way, e.g. by fluid inflation or mechanical means. Operation is preferably carried out remotely, especially in applications where the substrate is inaccessible, e.g. a buried pipeline. Similarly the electrically activated bonding is preferably carried out remotely.

Particular applications of the present invention that should be mentioned include making a new connection between a lateral pipeline and a main pipeline, relining of old pipelines e.g. sewer pipelines, and internal connections between two butted polymeric pipes.

For a lateral pipe connection a tunnelling device is first used to drill a hole through the first pipe (of diameter similar to that of the outer diameter of the lateral pipe). The lateral pipe is then brought close to the hole, and then the article of the invention is inserted within the lateral pipe so that one end thereof extends into the hole to a depth approximately equal to the thickness of the main pipeline. That end of the article can then be heat activated to bond it to the cut surface through the thickness of the wall of the main pipeline. Simultaneously, previously or subsequently bonds may also be achieved at the other end of the article (to the lateral pipeline) and between the overlapping longitudinal edges of the article itself.

According to a further aspect of the present invention a wraparound article suitable for applying to the internal surface of a hollow elongate substrate comprises (i) a flexible polymeric backing sheet, (ii) a plurality of electrically heatable elements comprising conductive polymeric material, bonded to the backing sheet, covering at least part of the backing sheet and extending over opposed ends of the wrapped article in its wrapped position, and a heating element extending longitudinally along the wraparound article, the wraparound article has a mastic sealing means on the electrically heatable element at one end only of the wraparound article.

The article of the invention preferably incorporates the features described above.

An embodiment of the invention will now be described, by way of example, with reference to the accompanying drawings, wherein:
Figure 1 is a plan view and Figure 2 is a side view of an article according to the invention.
Figure 3 shows the article of Figures 1 and 2 in a wrapped configuration ready for installation, and
Figure 4 is a sectional view which shows the article of Figures 1 to 3 installed within and between a main and a lateral pipeline thereby forming a connection between the two pipelines.

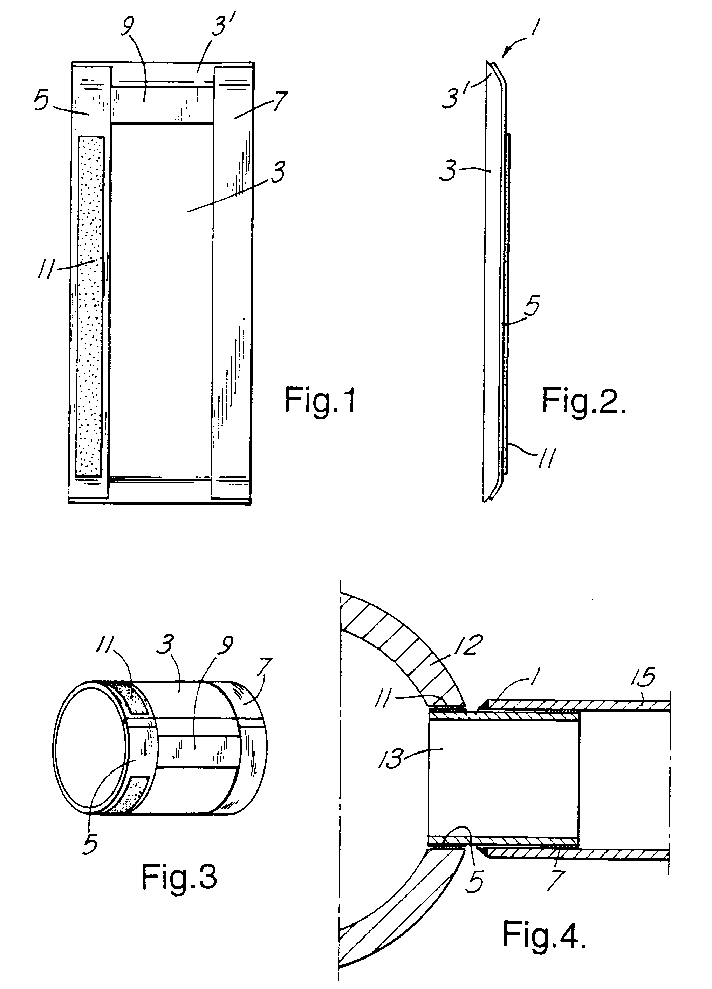

Referring to the drawings, the article, shown generally by the reference numeral 1 comprises a rectangular backing layer of polyethylene 3 having three strips 5, 7 and 9 of conductive carbon black loaded ultra high molecuiar weight polyethylene bonded along the two long and one short edge of the polyethylene backing layer 3. These act as the electrically heatable elements according to the invention. Each of the conductive strips 5, 7 and 9, also includes two elongate bus bars (not shown) extending along the edges of each strip which can be used to supply electrical power to the conductive polymeric material. This is done in the manner described in WO-A-88/06517. A coating layer of a mastic material 11 is also included on one of the long conductive strips, strip 5. This covers most but not the entire surface of strip 5. It does not extend to the edges of the strips, since the edges (on the outer side of the position of the bus bars) are not heated and are effectively dead areas. Referring to Figure 2 it can be seen that the short ends 3' of the backing layer 3 are tapered. The purpose of this is to reduce the profile of the wrapped sheet.

In order to install the article of Figure 1, it is first wrapped, with the backing layer 3 innermost, so that the longitudinal edges 3' of the backing layer 3 and also the adjacent area of the backing sheet overlap, so that the heatable strip 9 underlies an overlapped region of the backing layer 3. The wrapped configuration is shown in Figure 3.

Figure 4 shows a main concrete pipe 12 which has a hole 13 tunnelled therethrough, and a lateral polyethylene pipe 15 arranged substantially perpendicularly to the main pipeline 12 and brought into close proximity to the main pipe 12. The wrapped article of Figure 3 has been inserted within the lateral pipe so that the end thereof which is coated with mastic lies within the concrete pipe 12. Electrical power is then supplied remotely, and simultaneously to each of the conductive polymeric strips 5, 7, and 9, via their bus bars. This causes the following bonds to be formed. A bond is formed directly between the conductive polymeric strip 9 and the overlapped longitudinal edge of the wrapped backing layer 3. A bond is formed directly between the outer surface of the conductive polymeric strip 7 and the inner surface of the lateral pipe 15. Also, the conductive polymeric strip 5 heats and activates the mastic 11 which bonds to the cut surface of the wall of the main pipe 12. The bonds may be formed simultaneously, or sequentially, in any order. In a preferred embodiment each of strips 7 and 9 is covered with a thin skin coating of high density polyethylene which enhances the bond between the conductive polymeric strip and the lateral pipeline (in the case of strip 7) and the overlapping backing layer 3 ( in the case of strip 9)

The bond formed according to this specific example between the lateral pipeline 15 and the main pipeline 12 is sufficiently strong to withstand use, but also sufficiently flexible to withstand soil stresses if the pipelines are buried in soil.

### EXAMPLE

The following example describes one particular article which could be used in the present invention.

Polyethylene Backing layer (Ref 3 in Fig 1): Rectangular size 30 cm by 75 cm. Thickness over bulk of layer 3mm. Thickness tapering to zero at ends (3' in Fig 2) over a distance of 40 mm.

Ultrahigh molecular weight polyethylene (carbon black filled) strips Thickness 0.8 mm. Two long strips (ref nos. 5 and 7 in Figures) 73cm by 6cm. Short strip (ref 9 in Fig 1) 16cm by 6cm.

Mastic coating (on strip 5 in Fig 1) Thickness 1mm. Extending across 5cm of width of conductive strip 5.

Conductive polymeric strips (5 and 7 in Fig 1) cover 3cm of the 4 cm of taper of the polyethylene backing layer at its ends.

## Claims

1. A method of modifying the internal surface of a hollow elongate substrate (12, 15) using a wraparound article comprising (i) a polymeric backing sheet (3), (ii) an electrically heatable element (5,7,9) comprising a conductive polymeric material, bonded to the backing sheet and covering at least part of the backing sheet, and (iii) optionally a sealing means (11) covering part or all of the electrically heatable element, the method comprising:
(a) wrapping the article to form a tube with overlapping longitudinal edges with the heatable element (5,7,9) positioned outwardly of the backing sheet (3), and inserting the wrapped article within the substrate (12,15).
(b) connecting the heatable element to an electrical power source to cause electrical current to flow through the element, to heat and to bond at least part of the outer surface of the element to the inner surface of the hollow elongate substrate (12,15), either directly, or by means of, or enhanced by, the optional sealing means.

2. A method according to claim 1, wherein the electrical heatable element (5,7,9) covers part only of a surface of the backing sheet (3).

3. A method according to claim 2, wherein the backing sheet (3) is substantially rectilinear, and the electrically heatable element is in the form of strips (5,7,9) extending along three sides of the sheet.

4. A method according to claim 1, 2 or 3, wherein the electrically heatable element comprises ultrahigh molecular weight polyethylene containing a conductive filler, preferably carbon.

5. A method according to any preceding claim, wherein the sealing material (11) comprises a mastic or a hot melt adhesive.

6. A wraparound article (1) suitable for applying to the internal surface of a hollow elongate substrate comprising
(i) a flexible polymeric backing sheet (3),
(ii) a plurality of electrically heatable elements (5,7,9) comprising conductive polymeric material, bonded to the backing sheet, covering at least part of the backing sheet and extending over opposed ends of the wrapped article in its wrapped position, and a heatable element (9) extending longitudinally along the wraparound article,
(iii) sealing means (11) covering at least part of the exposed surface of the electrically heatable element to form or to enhance a bond to the electrically heatable element, whereby
the wrap around article has a mastic sealing means (11) on the electrically heatable element (5) at one end only of the wraparound article.

7. A wraparound article according to Claim 6, wherein the ends (3') of the backing sheet (3), which are longitudinal in the wrapped state, are tapered.

## Patentansprüche

1. Verfahren zum Modifizieren der inneren Oberfläche von einem hohlen langgestreckten Substrat (12,15) unter Verwendung eines Wickelgegenstandes, der folgendes aufweist:
(i) einen polymeren Träger-Flächenkörper (3),
(ii) ein elektrisch heizbares Element (5,7,9), das ein leitfähiges polymeres Material aufweist, das mit dem Träger-Flächenkörper verbunden ist und wenigstens einen Teil des Träger-Flächenkörpers bedeckt, und
(iii) fakultativ eine Abdichteinrichtung (11), die einen Teil oder das gesamte elektrisch heizbare Elenent bedeckt, wobei das Verfahren folgendes aufweist:
(a) Wickeln des Gegenstandes, um ein Rohr mit überlappenden Längskanten zu bilden, wobei das heizbare Element (5,7,9) außerhalb von dem Träger-Flächenkörper (3) angeordnet ist, und Einsetzen des Wikkelgegenstandes in das Substrat (12,15),
(b) Verbinden des heizbaren Elementes mit einer elektrischen Energiequelle, um zu bewirken, daß ein elektrischer Strom durch das Element fließt, um wenigstens einen Teil von der äußeren Oberfläche des Elementes mit der inneren Oberfläche des hohlen langgestreckten Substrats (12,15) zu verbinden, und zwar entweder direkt oder mittels der oder unterstützt von der fakultativen Abdichteinrichtung.

2. Verfahren nach Anspruch 1,
wobei das elektrisch heizbare Element (5,7,9) nur einen Teil von einer Oberfläche des Träger-Flächenkörpers (3) bedeckt.

3. Verfahren nach Anspruch 2,
wobei der Träger-Flächenkörper (3) im wesentlichen geradlinig ist, und das elektrisch heizbare Element in der Form von Streifen (5,7,9) ausgebildet ist, die sich entlang von drei Seiten des Flächenkörpers erstrecken.

4. Verfahren nach einem der Ansprüche 1, 2 oder 3,
wobei das elektrisch heizbare Element ein Polyethylen mit einem ultrahohen Molekulargewicht aufweist, das einen leitenden Füllstoff, vorzugsweise Kohlenstoff, enthält.

5. Verfahren nach einem der vorhergehenden Ansprüche,
wobei das Abdichtungsmaterial (11) ein Mastix oder einen Hotmelt-Kleber umfaßt.

6. Wickelgegenstand (1), der zum Anbringen an der inneren Oberfläche von einem hohlen langgestreckten Substrat geeignet ist und folgendes aufweist:
(i) einen flexiblen polymeren Träger-Flächenkörper (3),
(ii) eine Vielzahl von elektrisch heizbaren Elementen (5,7,9), die ein leitfähiges polymeres Material aufweisen, das mit dem Träger-Flächenkörper verbunden ist, und die wenigstens einen Teil von dem Träger-Flächenkörper bedecken und die sich über gegenüberliegende Enden des Wickelgegenstandes in seiner gewickelten Position erstrecken, und ein heizbares Element, das sich in Längsrichtung entlang des Wickelgegenstandes erstreckt,
(iii) eine Abdichteinrichtung (11), die wenigstens einen Teil von der freiliegenden Oberfläche des elektrisch heizbaren Elementes bedeckt, um eine Verbindung mit dem elektrisch heizbaren Element zu bilden oder zu unterstützen,
wobei der Wickelgegenstand eine Mastix-Abdichteinrichtung (11) an dem elektrisch heizbaren Element (5) nur an dem einen Ende von dem Wickelgegenstand hat.

7. Wickelgegenstand nach Anspruch 6,
wobei die Enden (3') des Träger-Flächenkörpers (3), die in dem gewickelten Zustand in Längsrichtung verlaufen, schräg verlaufen.

## Revendications

1. Procédé de modification de la surface intérieure d'un substrat allongé et creux (12, 15), utilisant un article enroulé comportant (i) une feuille dorsale polymérique (3), (ii) un élément (5, 7, 9) pouvant être chauffé électriquement et comprenant une matière polymérique conductrice, lié à la feuille dorsale et couvrant au moins une partie de la feuille dorsale, et (iii) optionnellement des moyens de scellage (11) couvrant une partie ou la totalité de l'élément pouvant être chauffé électriquement, le procédé comprenant :
(a) l'enroulement de l'article pour former un tube avec des bords longitudinaux en recouvrement, l'élément (5, 7, 9) pouvant être chauffé étant positionné à l'extérieur de la feuille dorsale (3), et l'insertion de l'article enroulé à l'intérieur du substrat (12, 15),
(b) la connexion de l'élément pouvant être chauffé à une source d'énergie électrique pour provoquer la circulation d'un courant électrique à travers l'élément, pour chauffer et pour lier au moins une partie de la surface extérieure de l'élément à la surface intérieure du substrat allongé et creux (12, 15) soit directement, soit par l'intermédiaire, ou avec le renfort, des moyens optionnels de scellage.

2. Procédé selon la revendication 1, dans lequel l'élément (5, 7, 9) pouvant être chauffé électriquement ne couvre qu'une partie d'une surface de la feuille dorsale (3).

3. Procédé selon la revendication 2, dans lequel la feuille dorsale (3) est sensiblement rectiligne et l'élément pouvant être chauffé électriquement se présente sous la forme de bandes (5, 7, 9) s'étendant le long de trois côtés de la feuille.

4. Procédé selon la revendication 1, 2 ou 3, dans lequel l'élément pouvant être chauffé électriquement comprend du polyéthylène de poids moléculaire ultra-haut contenant une charge conductrice, avantageusement du carbone.

5. Procédé selon l'une quelconque des revendications précédentes, dans lequel la matière de scellage (11) comprend un mastic ou un adhésif thermofusible.

6. Article enroulé (1) convenant à une application sur la surface intérieure d'un substrat allongé et creux, comportant
(i) une feuille dorsale polymérique flexible (3),
(ii) plusieurs éléments (5, 7, 9) pouvant être chauffés électriquement, comprenant une matière polymérique conductrice, liés à la feuille dorsale, couvrant au moins une partie de la feuille dorsale et s'étendant sur des extrémités opposées de l'article enroulé dans sa position enroulée, et un élément (9) pouvant être chauffé s'étendant longitudinalement le long de l'article enroulé,
(iii) des moyens de scellage (11) couvrant au moins une partie de ia surface à découvert de l'élément pouvant être chauffé électriquement afin de former ou renforcer une liaison avec l'élément pouvant être chauffé électriquement,
grâce à quoi
l'article enroulé comporte des moyens de scellage (11) en mastic sur l'élément (5) pouvant être chauffé électriquement, à une seule extrémité de l'article enroulé,

7. Article enroulé selon la revendication 6, dans lequel les extrémités (3') de la feuille dorsale (3), qui sont longitudinales dans l'état enroulé, sont effilées.
